# EUROPEAN PATENT SPECIFICATION

(11) **EP 3 457 853 B1**
(45) Date of publication and mention of the grant of the patent: **02.09.2020**
(21) Application number: 17723471.3
(22) Date of filing: 04.05.2017
(51) Int. Cl.: A01N 59/00, A01P 3/00

(54) **ELECTROLYZED WATER COMPOSITION**
ELEKTROLYSIERETE WASSERZUSAMMENSETZUNG
COMPOSITION D'EAU ÉLECTROLYSÉE

(30) Priority: 20.05.2016 GB 201608891
(43) Date of publication of application: 27.03.2019
(73) Proprietor: Ozo Innovations Ltd, Kidlington, Oxfordshire OX5 1FQ (GB)
(72) Inventor: GARDNER, Stephen Philip, Stow-on-the-wold Gloucestershire GL54 1DW (GB)
(74) Representative: Butler, Kathryn Louise
(86) International application number: PCT/GB2017/051239
(87) International publication number: WO 2017/199000

(56) References cited:
- WO-A1-2012/017445
- WO-A2-2013/103758
- Carlos A Martínez-Huitle ET AL: "RECENT ENVIRONMENTAL APPLICATIONS OF DIAMOND ELECTRODE: CRITICAL REVIEW", J. Environ. Eng. Management, 1 January 2008 (2008-01-01), pages 155-172, XP055085055, Retrieved from the Internet: URL:http://ser.cienve.org.tw/download/18-3 /jeeam18-3_155-172.pdf [retrieved on 2013-10-23]

## Description

### Field of the Invention

The present invention relates to an electrolyzed water composition, and the use of the electrolyzed water composition for the treatment of pathogens, including fungal, pathogens, within for example the agricultural industry.

### Background

There are a number of plant diseases such as *Septoria tritici* caused by *Mycosphaerella graminicola* which present serious issues to farmers and growers. The plant pathogens may significantly reduce the yield and quality within crops such as wheat. In some cases, the plant pathogens may destroy up to 50% of viable crops resulting in significant financial losses. The pathogens are often very difficult to control in any systemic fashion and resistance to conventional chemical pesticides can grow rapidly within a pathogen population. The pathogens can continue to spread throughout a crop even with regular spraying with conventional chemical pesticides.

A number of agricultural chemical controls which are currently used to protect crops against plant pathogens are highly toxic to humans. As a result, the grower or farmer must use additional protective equipment and/or wear expensive protective clothing and breathing apparatus. Furthermore, the chemicals may not be used beyond a certain time point in the growing season prior to harvest in order to minimise the risk of chemical residues being present on or in the crops at harvest. The use of these chemicals also has associated environmental implications. The current agricultural controls have come under severe regulatory restriction. Effective disease management options must also be economical. The cost of managing the disease must be less than the value of the crops to be harvested. WO 2013/103758 describes a method for treating pathogens like fungi in various environments, including crops by electrolysing i.a. a chlorine and carbonate containing solution. WO 2012/017445 describes a method for treating pathogens in general, esp. in the context of laundry.

There is therefore a need for a biocidal composition with improved efficiency in protecting wheat crops against plant fungal pathogens that also has lower associated energy and cost implications, and/or reduced environmental and health implications. There is also a need for a method of treating agricultural crops which does not require any additional treatment apparatus.

### Summary of the Invention

Electrolyzed water compositions for use in the treatment of wheat fungal pathogens, are produced by a method comprising:
preparing an electrolyte solution comprising water, at least one anhydrous alkali metal carbonate salt, and at least one alkali metal chloride salt;
introducing the aqueous electrolyte solution into an electrolytic cell comprising a plurality of boron-doped diamond electrodes; and
operating a power supply to apply a predetermined voltage to the electrolyte solution within the electrolytic cell to produce an electrolyzed water composition comprising a plurality of active molecular and ionic species having anti-microbial properties,
in which the salts of the electrolyte are selected such that the dissolved O₃ concentration is in the range of from 1 to 1000 ppm.

Preferably, the salts of the electrolyte are selected such that the electrolyzed water biocidal composition comprises a free accessible chlorine (FAC) concentration in the range of from 0 to 1000 ppm. The electrolyte solution may be introduced into the electrolytic cell in a continuous or batch process manner.

Preferably the at least one chloride salt is potassium chloride or sodium chloride.

Preferably the at least one carbonate salt is anhydrous potassium carbonate or anhydrous sodium carbonate.

The total salt concentration of carbonate salts and chloride salts within the aqueous electrolyte solution is preferably within the range of between about 0.1 g/l and 400 g/l. Preferably, the total salt concentration of carbonate salts and chloride salts within the aqueous solution is in the range of between 0.1 g/l and about 100 g/l, more preferably between 0.5 g/l and 80 g/l, especially preferably between 1.0 g/l and 50 g/l, for example in the range of 1.0 g/l and 5.5 g/l.

The ratio of chloride salts to carbonate salt(s) by weight within the aqueous electrolyte solution is preferably less than or equal to 1:1, more preferably less than or equal to 0.9:1. The ratio of carbonate salts to chloride salt(s) within the aqueous electrolyte solution by weight is preferably greater than 1.1: 1, more preferably greater than 1.15:1

The electrolyte solution can optionally include one or more additional salts to enhance the biocidal properties, in particular the pathogenic activity, of the resultant electrolyzed water composition.

The predetermined voltage is preferably in the range of between about 1 and 1000 volts DC, preferably in the range of between 48 to 96 volts DC.

The power supply preferably has a current in the range of between about 1 and 1000 ampere, preferably at about 24 ampere.

The plurality of active molecular and ionic species within the electrolyzed water composition may comprise dissolved O₃ in a concentration between about 1 and 1000 ppm. The electrolyzed water composition preferably comprises dissolved O₃ in a concentration between 10 and 500 ppm, more preferably in a concentration between 50 and 300 ppm.

The electrolyzed water composition can be varied in terms of its composition and degree of overpotential by carrying the concentrations of the salts and by carrying the current applied to the solution. In this way, specific electrolyzed water compositions can be created for treating certain fungal pathogens, including live organisms such as spores and biofilms. The concentrations and overpotential can be varied so as to achieve the required mix between antimicrobial properties and delivery mechanisms.

According to a first aspect, the present invention provides the use of an electrolyzed water composition as herein described in the treatment of wheat fungal pathogens..

According to a second aspect, the present invention provides a method for treating wheat fungal pathogens, comprising applying an electrolyzed water composition as herein described to an area, for example a wheat crop or an area containing a wheat crop, affected with pathogens.

According to a further aspect, the present invention provides an applicator for treating wheat fungal pathogens, in which the applicator comprises a reservoir comprising an electrolyzed water composition as herein described, and an outlet in fluid communication with the reservoir. The outlet may for example be a nozzle. The applicator may comprise a reservoir which is arranged in use to be connected to a spraying device, a fogging mist device or to equipment, such as for example processing lines or wash systems within the environment to be treated.

The applicator may for example be selected from one or more of: a nebuliser, a fogging mist applicator, a jet spray applicator, a spray applicator, or an irrigation system, or any combination thereof.

According to a further aspect, the present invention provides an apparatus for producing electrolyzed water composition for use in treating wheat fungal pathogens, the apparatus comprising:
a reservoir comprising an electrolyte solution comprising water, at least one anhydrous alkali metal carbonate salt, and at least one alkali metal chloride salt;
an electrolytic cell in fluid communication with the reservoir to receive a feed stream comprising the aqueous electrolyte solution; and
a plurality of boron-doped diamond located within the electrolytic cell and arranged in use to be connected to a power supply.

The electrolytic cell preferably comprises at least one outlet through which the electrolysed water composition exits the electrolytic cell.

The system may further comprise one or more flow regulators arranged in use to adjust the flow of the electrolyte feed stream between the reservoir and the cell.

The system may further comprise a heater arranged in use to adjust the temperature of the flow of the electrolyte feed stream and/or the electrolyte solution within the cell.

The system may further comprise a control system arranged in use to control the flow rate of the electrolyte feed stream as required, such as for example by controlling the flow regulator(s).

The system may comprise a control system arranged in use to control the power supply to the electrodes.

The system may comprise a control system arranged in use to control the temperature of the electrolyte solution.

Control of the temperature of the electrolyte solution, the flow rate of the electrolyte solution feed stream, and the power supply to the electrodes may be provided by a single control system. Alternatively, these factors may be controlled by separate control systems.

The electrolyte solution comprises at least one anhydrous alkali metal carbonate salt, and at least one alkali metal chloride salt. The electrolyte solution preferably comprises: at least one carbonate salt selected from anhydrous potassium carbonate and/or anhydrous sodium carbonate; and at least one chloride salt selected from potassium chloride and/or sodium chloride. Preferably, the electrolyte solution comprises anhydrous sodium carbonate and sodium chloride.

### Brief Description of Figures

Embodiments of the present invention will now be described, by way of example, with reference to the following figures:

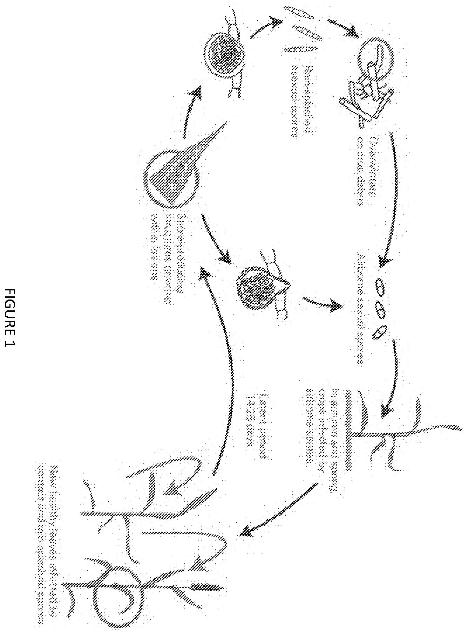

Figure 1 is a graphical representation of the life cycle of *septoria tritici*;
Figure 2a-2f are photographic representations comparing the effect of applying the compositions of Example 1 (labelled Mix38 and K38), and a comparative electrolyzed water composition (labelled SD); and known pesticide Adexar to wheat plants infected with *septoria tritici*;
Figure 3 is a graphical representation comparing the effect measured in terms of disease score of applying the compositions of Example 1 (labelled Mix38 and K38), and a comparative electrolyzed water composition (labelled SD); and known pesticide Adexar to wheat plants infected with *septoria tritici*; and
Figure 4 is a graphical representation comparing the effect measured in terms of leaf length of applying the compositions of Example 1 (labelled Mix38 and K38), and a comparative electrolyzed water composition (labelled SD); and known pesticide Adexar to wheat plants infected with *septoria tritici.*

### Detailed Description

### Example 1 - Electrolyzed water composition

An aqueous electrolyte solution comprising 14 g sodium chloride and 16g anhydrous sodium carbonate in 12 I of water was prepared. The electrolyte solution was stored within a reservoir chamber in fluid communication with an electrolytic cell.

A feed stream comprising the electrolyte solution was introduced into an electrolytic flow cell. The feed stream can optionally include one or more additional salts to enhance the biocidal properties of the resultant electrolyzed water composition.

The electrolytic cell is a non-membrane electrolytic cell. It is however to be understood that any suitable electrolytic cell may be used.

The electrolytic cell comprises a casing, a plurality of boron doped diamond electrodes (BDEs) located within the cell, and metal 'contact plates' used for transmitting charge across the electrolyte solution.

The BDEs are sheet-like components and are provided in a stack of between 3 and 10 sheets. Each sheet is located at a fixed distance away from an adjacent sheet. The distance between adjacent sheets of BDEs provides a cell gap, which is preferably less than 5 mm, for example between approximately 2 and 3 mm. The BDEs are provided in a plastic frame. The BDEs transmit charge across the electrolyte solution, inducing a strong dipole and creating positively and negatively charged radicals on alternate surfaces of the diamonds.

The electrolyte solution may be introduced into the electrolytic cell in any suitable manner so as to produce electrolyzed water composition in a continuous process or in a batch process. In the continuous process, the electrolyte solution may be introduced at a suitable flow rate, such as for example at a flow rate in the range of from 0.1 to 100 l/min, for example in the range of from 3 to 5 l/min. In the batch process, the electrolyte solution may have a flow rate of approximately 16 l/min.

A power supply was operated to apply a voltage in the range of between 1 and 1,000 Volt D.C. and a current within the range of from 1-1,000 ampere to the electrolyte solution.

The over-potential provided between the electrodes shifts the equilibrium within the electrolyte solution such that a range of 'active species' ions and molecules are produced and remain within the electrolyzed water for a significant amount of time. The term 'significant amount of time' is used herein to refer to at least 10 minutes, preferably at least 30 minutes, more preferably at least 45 minutes, for example at least 60 minutes. The combination of active molecular and ionic species together with the over-potential which supports the equilibrium confers a variable degree of pesticidal activity to the electrolyzed water composition.

The electrolytic cell preferably comprises an outlet through which the electrolyzed water composition exits the cell. The resulting electrolyzed water composition comprises a range of active molecular and ionic species which have biocidal properties.

The active molecular and ionic species include dissolved ozone. The electrolyzed water composition according to this embodiment comprises dissolved ozone at a level of approximately 50 ppm. The electrolyzed water composition according to this embodiment comprises free accessible chlorine (FAC) at a level of approximately 350 ppm.

Although the present invention comprises the use of electrolyzed water compositions containing dissolved ozone at a level of approximately 50 ppm, it is to be understood that the present invention may use electrolyzed water compositions comprising any suitable level of dissolved ozone within the range of between 0.1 and 1,000 ppm. Although the present invention comprises the use of electrolyzed water compositions containing FAC at a level of approximately 350 ppm, it is to be understood that the present invention may use electrolyzed water compositions comprising any suitable level of FAC within the range of between 0 and 1,000 ppm, for example between 0.01 and 350 ppm.

It is also to be understood that the electrolyzed water composition may be varied by varying one or more of: the components of the electrolyte composition, the concentration of the components within the electrolyte composition, the degree of over-potential, the current applied, or any combination thereof. In this way the biocidal properties of the electrolyzed water biocidal composition may be tailored to suit different agricultural targets, such as for example crops, pathogens, delivery mechanism, and time points, or any combination thereof. For example, the biocidal properties of the electrolyzed water biocidal composition may be tailored in relation to when the composition is to be applied, such as for example during preparation of growing beds, during sowing and/or during growing seasons.

The system may further comprise one or more flow regulators arranged in use to adjust the flow of the electrolyte feed stream between the reservoir and the cell.

The system may further comprise a heater arranged in use to adjust the temperature of the flow of the electrolyte feed stream and/or the electrolyte solution within the cell.

The system may further comprise a control system arranged in use to control the flow rate of the electrolyte feed stream as required, such as for example by controlling the flow regulator(s).

The system may comprise a control system arranged in use to control the power supply to the electrodes.

The system may comprise a control system arranged in use to control the temperature of the electrolyte solution.

Control of the temperature of the electrolyte solution, the flow rate of the electrolyte solution feed stream, and the power supply to the electrodes may be provided by a single control system. Alternatively, these factors may be controlled by separate control systems.

Example 2 - *Septoria tritici (Mycosphaerella graminicola)* control on Wheat plants *Septoria tritici* infected wheat plants were treated with five different treatments.
Treatment 1: untreated control (UT);
Treatment 2: Adexar (known fungicide);
Treatment 3: SD (Comparative Example of an alternate electrolysed water solution, with salts comprising NaCl at 0.30 g/l, Na₂CO₃ at 1.60 g/l, KH₂PO₄ at 0.90 g/l, KNO₃ at 0.80g/l, CaC₁₂·6H₂O at 1.60 g/l, Mg(NO₃)₂·6H₂O at 0.80 g/l);
Treatment 4: composition of Example 1 with sodium salts (Mix 38).
Treatment 5: composition of Example 1 with potassium salts (K38)

The treatments were applied using a foliar spray. Each treatment group consisted of four replicates of 8 plants from a susceptible variety of wheat (Consort; Gallant; and Riband). Each treatment was sprayed onto the diseased plants for 10 seconds. It is to be understood that the treatment is to be applied until the treatment begins to run off from the leaves.

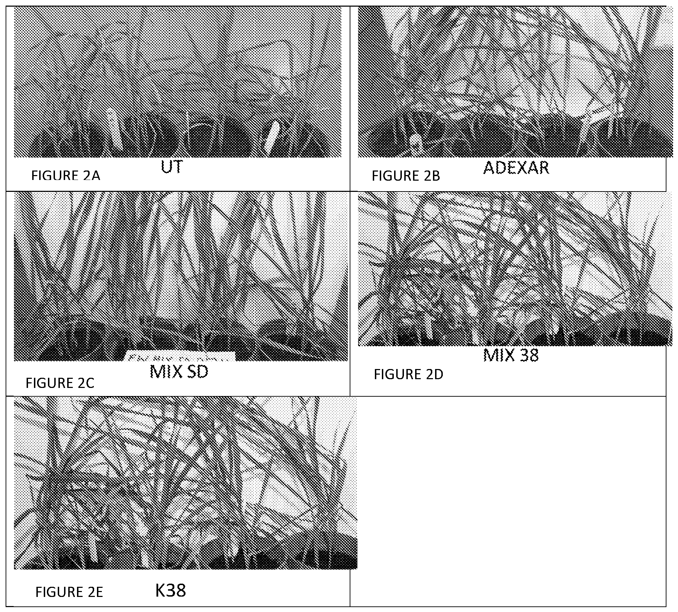

The results of the treatment are illustrated in Figure 2A to 2E, Figure 3 and Figure 4.

Figures 2A to 2E are photographic images of wheat plants infected with *Septoria tritici* (*Mycosphaerella graminicola*). The wheat plants shown in figure 2A are not treated with any pesticidal composition (treatment 1). The wheat plants shown in Figure 2B are treated with a known pesticidal composition known as Adexar (treatment 2). The wheat plants shown in Figure 2D and 2E are treated with the composition of Example 1 (treatments 4 and 5).

Figure 2A shows that the untreated wheat plants are diseased by the plant pathogens. A significant number of the leaves are browning, wilting and diseased.

As shown in Figure 2B, the wheat plants treated with Adexar (treatment 2) appear significantly more healthy than the untreated wheat plants (treatment 1) of Figure 2A. The wheat plants treated with Adexar have less wilting and diseased branches and leaves. This illustrates that Adexar is effective at treating at least some of the plant pathogens under idealised conditions.

As shown in Figures 2D and 2E, the wheat plants treated with the composition of Example 1 (treatments 4 and 5) are significantly healthier than the untreated plants of Figures 2A (treatment 1), and almost as healthy as the plants treated with Adexar (treatment 2) (Figure 2B). The wheat plants treated with the composition of Example 1 (treatments 4 and 5) appear to have very few wilting or diseased leaves and branches.

The effect of resistance to pesticides is well known and various wheat fungicides products in classes such as triazols and succinate dehydrogenase inhibitors (SDHIs) suffer from reduced efficacy due to development of pesticide resistance in the pathogen population. The active ingredient in the electrolyzed water composition of Example 1 has a physicochemical mechanism of action for which no resistance has been observed. The electrolyzed water composition of Example 1 therefore has a similar pesticidal effect against *Septoria tritici (Mycosphaerella graminicola*) in wheat crops than the known pesticide Adexar, but offers a non-resistance generating alternative treatment option.

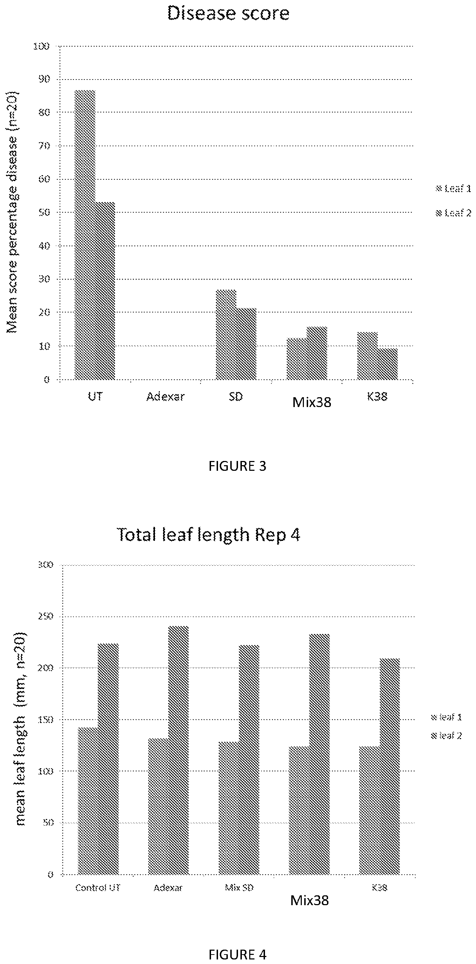

Figure 3 illustrates the degree of wheat crop infection or disease as represented by the percentage of leaves displaying wilting and/or formation of pale brown lesions on the bottom leaves with small black fungal bodies (pycnidia) as a factor of time after treatment. It can be seen that the use of the compositions of Example 1 (Treatments 4 and 5; Mix38 and K38) provides an improved pesticidal effect and significantly reduces the percentage of disease on the plants when compared with the untreated control (treatment 1: UT) and the other electrolyzed water composition treatments. Treatments 4 and 5 (Composition of Example 1) perform almost as well as the known pesticide (Treatment 2: Adexar).

Figure 4 illustrates the total leaf length as a factor of time after treatment. It can be seen that the use of the compositions of Example 1 (Treatments 4 and 5: Composition of Example 1) provides an improved pesticidal effect and does not adversely affect the crop growth when compared with the untreated control (treatment 1: UT) and the two other treatments.

The method of pesticidal treatment of a substrate, for example wheat crops or areas comprising wheat crops, using the electrolyzed water compositions described herein have significantly reduced environmental issues compared to conventional methods. In contrast to a number of conventional methods, the electrolyzed water compositions described herein contain only simple, non-toxic and food-approved salts. Use of the electrolyzed water compositions described herein are therefore more environmentally friendly than known pesticidal compositions. Furthermore, use of the compositions described herein does not leave any harmful chemical residues on treated food. The electrolyzed water compositions described herein are non-toxic and non-tainting. The electrolyzed water compositions described herein have a significantly improved ozone concentration compared to the level which can be achieved by injection of gaseous ozone into water. For example, the electrolyzed water compositions described herein may have approximately 100 times the level which can be achieved by injection of gaseous ozone into water. As such, the wheat crops may be treated by the electrolyzed water compositions described herein more frequently, during extended periods of crop production, such as for example closer to crop harvest, and without requiring any additional health and safety protection or equipment. The present invention provides a cost effective alternative to the use of known chemical pesticides for the treatment of wheat fungal pathogens. Use of the electrolyzed water compositions as described herein for the treatment of wheat fungal pathogens provides medium term protective effect and an ongoing protective effect.

It is to be understood that the Examples are illustrative of the pesticidal properties of the compositions of the present invention. It is to be understood that the compositions described herein may be applied in any suitable manner to an agricultural area or crop(s) comprising wheat crops.

## Claims

1. A method of treating wheat fungal pathogens, comprising applying an electrolyzed water composition to a wheat crop affected with pathogens or area containing a wheat crop affected with pathogens, in which the electrolyzed water composition is prepared by a method comprising:
preparing an electrolyte solution comprising water, at least one carbonate salt selected from anhydrous alkali metal carbonate salts, and at least one chloride salt selected from: alkali metal chloride salts;
introducing the aqueous electrolyte solution into an electrolytic cell comprising a plurality of boron-doped diamond electrodes; and
operating a power supply to apply a predetermined voltage to the electrolyte solution to produce an electrolyzed water biocidal composition comprising a plurality of active molecular and ionic species having biocidal activity,
in which the mixture of at least two salts of the electrolyte are selected such that the dissolved O₃ concentration is in the range of from 0.1 to 1,000 ppm.

2. A method as claimed in claim 1, comprising applying the electrolyzed water composition is applied to the wheat crop or area containing a wheat crop using an applicator selected from one or more of: a nebuliser, a fogging mist applicator, a jet spray applicator, a spray applicator, or an irrigation system, or any combination thereof.

3. Use of an electrolyzed water composition for the treatment of wheat fungal pathogens, in which the electrolyzed water composition is prepared by a method comprising:
preparing an electrolyte solution comprising water, at least one carbonate salt selected from anhydrous alkali metal carbonate salts, and at least one chloride salt selected from: alkali metal chloride salts;
introducing the aqueous electrolyte solution into an electrolytic cell comprising a plurality of boron-doped diamond electrodes; and
operating a power supply to apply a predetermined voltage to the electrolyte solution to produce an electrolyzed water biocidal composition comprising a plurality of active molecular and ionic species having biocidal activity,
in which the mixture of at least two salts of the electrolyte are selected such that the dissolved O₃ concentration is in the range of from 0.1 to 1,000 ppm.

4. Use as claimed in claim 3, in which the electrolyte solution comprises at least one carbonate salt selected from anhydrous sodium carbonate and/or anhydrous potassium carbonate.

5. Use as claimed in either of claims 3 and 4, in which the electrolyte solution comprises at least one chloride salt selected from sodium chloride and potassium chloride.

6. Use as claimed in any one of claims 3 to 5, in which the electrolyte solution comprises at least one carbonate salt selected from: anhydrous alkali metal carbonates, and at least one chloride salt selected from: alkali metal chloride salts.

## Patentansprüche

1. Verfahren zur Behandlung von Pilzpathogenen bei Weizen, umfassend das Aufbringen einer elektrolysierten Wasserzusammensetzung auf eine mit Pathogenen befallene Weizenernte oder einen Bereich, der eine mit Pathogenen befallene Weizenernte enthält, wobei die elektrolysierte Wasserzusammensetzung durch ein Verfahren hergestellt wird, das Folgendes umfasst:
Herstellen einer Elektrolytlösung, umfassend Wasser, mindestens ein Carbonatsalz, ausgewählt aus wasserfreien Alkalimetallcarbonatsalzen, und mindestens ein Chloridsalz, ausgewählt aus: Alkalimetallchloridsalzen;
Einführen der wässrigen Elektrolytlösung in eine elektrolytische Zelle, die eine Vielzahl von mit Bor dotierten Diamantelektroden umfasst; und
Betreiben einer Stromversorgung zum Anlegen einer vorbestimmten Spannung an die Elektrolytlösung, um eine elektrolysierte biozide Wasserzusammensetzung herzustellen, die eine Vielzahl von aktiven molekularen und ionischen Spezies mit biozider Aktivität umfasst, wobei das Gemisch aus mindestens zwei Salzen des Elektrolyten so ausgewählt ist, dass die Konzentration an gelöstem O₃ im Bereich von 0,1 bis 1000 ppm liegt.

2. Verfahren nach Anspruch 1, wobei die elektrolysierte Wasserzusammensetzung auf die Weizenernte oder den Bereich, der eine Weizenernte enthält, unter Verwendung eines Applikators aufgebracht wird, der aus einem oder mehreren der Folgenden ausgewählt ist: einem Vernebeler, einem Zerstäubungsnebelapplikator, einem Sprühdüsenapplikator, einem Sprühapplikator oder einem Bewässerungssystem oder einer beliebigen Kombination davon.

3. Verwendung einer elektrolysierten Wasserzusammensetzung zur Behandlung von Pilzpathogenen bei Weizen, wobei die elektrolysierte Wasserzusammensetzung nach einem Verfahren hergestellt wird, das Folgendes umfasst:
Herstellen einer Elektrolytlösung, umfassend Wasser, mindestens ein Carbonatsalz, ausgewählt aus wasserfreien Alkalimetallcarbonatsalzen, und mindestens ein Chloridsalz, ausgewählt aus: Alkalimetallchloridsalzen;
Einführen der wässrigen Elektrolytlösung in eine elektrolytische Zelle, die eine Vielzahl von mit Bor dotierten Diamantelektroden umfasst; und
Betreiben einer Stromversorgung zum Anlegen einer vorbestimmten Spannung an die Elektrolytlösung, um eine elektrolysierte biozide Wasserzusammensetzung herzustellen, die eine Vielzahl von aktiven molekularen und ionischen Spezies mit biozider Aktivität umfasst, wobei das Gemisch aus mindestens zwei Salzen des Elektrolyten so ausgewählt ist, dass die Konzentration an gelöstem O₃ im Bereich von 0,1 bis 1000 ppm liegt.

4. Verwendung nach Anspruch 3, wobei die Elektrolytlösung mindestens ein Carbonatgestein umfasst, ausgewählt aus wasserfreiem Natriumcarbonat und/oder wasserfreiem Kaliumcarbonat.

5. Verwendung nach einem der Ansprüche 3 und 4, wobei die Elektrolytlösung mindestens ein Chloridsalz umfasst, ausgewählt aus Natriumchlorid und Kaliumchlorid.

6. Verwendung nach einem der Ansprüche 3 bis 5, wobei die Elektrolytlösung mindestens ein Carbonatsalz umfasst, ausgewählt aus: wasserfreien Alkalimetallcarbonaten, und mindestens ein Chloridsalz, ausgewählt aus: Alkalimetallchloridsalzen.

## Revendications

1. Procédé de traitement de pathogènes fongiques du blé, comprenant l'application d'une composition d'eau électrolysée à une récolte de blé affectée par des pathogènes ou à une zone contenant une récolte de blé affectée par des pathogènes, dans lequel la composition d'eau électrolysée est préparée par un procédé comprenant :
la préparation d'une solution d'électrolyte comprenant de l'eau, au moins un sel carbonate sélectionné entre des sels carbonates de métal alcalin anhydre, et au moins un sel chlorure sélectionné entre des sels chlorures de métal alcalin ;
l'introduction de la solution d'électrolyte aqueuse dans une cellule électrolytique comprenant une pluralité d'électrodes de diamant dopé au bore ; et
l'actionnement d'une alimentation électrique pour appliquer une tension prédéterminée à la solution d'électrolyte pour produire une composition biocide d'eau électrolysée comprenant une pluralité d'espèces moléculaires et ioniques actives ayant une activité biocide,
dans lequel le mélange d'au moins deux sels de l'électrolyte est sélectionné de telle sorte que la concentration de O₃ dissous soit dans la gamme de 0,1 à 1 000 ppm.

2. Procédé selon la revendication 1, comprenant l'application de la composition d'eau électrolysée à la récolte de blé ou à la zone contenant une récolte de blé au moyen d'un applicateur sélectionné entre un ou plusieurs de : un nébuliseur, a applicateur vaporisateur, un applicateur pulvérisant un jet, un applicateur pulvérisateur, ou un système d'irrigation, ou toute combinaison de ceux-ci.

3. Utilisation d'une composition d'eau électrolysée pour le traitement de pathogènes fongiques du blé, dans laquelle la composition d'eau électrolysée est préparée par un procédé comprenant :
la préparation d'une solution d'électrolyte comprenant de l'eau, au moins un sel carbonate sélectionné entre des sels carbonates de métal alcalin anhydre, et au moins un sel chlorure sélectionné entre des sels chlorures de métal alcalin ;
l'introduction de la solution d'électrolyte aqueuse dans une cellule électrolytique comprenant une pluralité d'électrodes de diamant dopé au bore ; et
l'actionnement d'une alimentation électrique pour appliquer une tension prédéterminée à la solution d'électrolyte pour produire une composition biocide d'eau électrolysée comprenant une pluralité d'espèces moléculaires et ioniques actives ayant une activité biocide,
dans laquelle le mélange d'au moins deux sels de l'électrolyte est sélectionné de telle sorte que la concentration de O₃ dissous soit dans la gamme de 0,1 à 1 000 ppm.

4. Utilisation selon la revendication 3, dans laquelle la solution d'électrolyte comprend au moins un sel carbonate sélectionné entre le carbonate de sodium anhydre et/ou le carbonate de potassium anhydre.

5. Utilisation selon l'une des revendications 3 et 4, dans laquelle la solution d'électrolyte comprend au moins un sel chlorure sélectionné entre le chlorure de sodium et le chlorure de potassium.

6. Utilisation selon l'une quelconque des revendications 3 à 5, dans laquelle la solution d'électrolyte comprend au moins un sel carbonate sélectionné entre : des carbonates de métal alcalin anhydre, et au moins un sel chlorure sélectionné entre des sels chlorures de métal alcalin.
